(19) Europäisches Patentamt
European Patent Office
Office européen des brevets

(11) **EP 4 227 118 B1**

(12) **EUROPÄISCHE PATENTSCHRIFT**

(45) Veröffentlichungstag und Bekanntmachung des Hinweises auf die Patenterteilung:
**30.10.2024   Patentblatt 2024/44**

(21) Anmeldenummer: **23150599.1**

(22) Anmeldetag: **06.01.2023**

(51) Internationale Patentklassifikation (IPC):
**B60C 11/24** $^{(2006.01)}$

(52) Gemeinsame Patentklassifikation (CPC):
**B60C 11/246**

(54) **VERFAHREN UND VORRICHTUNG ZUR ÜBERWACHUNG EINES PROFILABRIEBS EINES FAHRZEUGREIFENS**

METHOD AND DEVICE FOR MONITORING THE ABRASION OF A VEHICLE TYRE PROFILE

PROCÉDÉ ET DISPOSITIF DE SURVEILLANCE D'UNE ABRASION PROFILÉE D'UN PNEU DE VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **11.02.2022   DE 102022201475**

(43) Veröffentlichungstag der Anmeldung:
**16.08.2023   Patentblatt 2023/33**

(73) Patentinhaber: **Continental Reifen Deutschland GmbH**
**30175 Hannover (DE)**

(72) Erfinder:
• **Sahlmüller, Baldo**
  **30165 Hannover (DE)**
• **Lehmann, Jörg**
  **30165 Hannover (DE)**
• **Welser, Joachim**
  **30165 Hannover (DE)**

(74) Vertreter: **Continental Corporation**
**c/o Continental AG**
**Intellectual Property**
**Postfach 169**
**30001 Hannover (DE)**

(56) Entgegenhaltungen:
| | |
|---|---|
| EP-A1- 3 789 215 | WO-A1-2021/192474 |
| DE-A1- 102015 216 210 | DE-A1- 102015 216 212 |
| DE-A1- 102020 203 168 | JP-A- 2011 168 211 |
| JP-A- 2013 136 297 | US-A1- 2010 186 492 |
| US-A1- 2018 079 262 | US-A1- 2021 208 029 |

**Beschreibung**

Die vorliegende Erfindung betrifft ein Verfahren sowie eine Vorrichtung zur Überwachung eines Profilabriebs eines Fahrzeugreifens, insbesondere zum Feststellen eines ungleichmäßigen Profilabriebs. Sie betrifft ferner einen Fahrzeugreifen mit einer derartigen Vorrichtung.

Ungleichmäßiger Abrieb kommt bei Fahrzeugreifen, insbesondere auch bei Nutzfahrzeugen, häufig vor. Ursachen für ungleichmäßigen Abrieb, d.h. über die Lauffläche des Fahrzeugreifens ungleichmäßigen Abrieb, können beispielsweise ein fehlerhafter Luftdruck und/oder Fehleinstellungen des Fahrwerks sein. Ein unregelmäßiger Abrieb kann demnach auf sicherheitsrelevante Fehleinstellungen hinweisen und darüber hinaus auch selbst die Fahrsicherheit beeinträchtigen.

Derzeit kann unregelmäßiger Abrieb von Fahrzeugreifen durch eine manuelle Kontrolle festgestellt werden oder durch eine automatisierte Kontrolle, die jedoch das Überfahren von Kontrollvorrichtungen erfordert. Derartige Lösungen sind zeitaufwendig und teuer und können nur stationär eingesetzt werden.

Im Reifen installierte Sensoren sind für verschiedene Anwendungszwecke bekannt. Neben Reifendrucksensoren ist es beispielsweise aus der WO 2017/032466 bekannt, mittels einer Messung der Radialbeschleunigung im Fahrzeugreifen die Profiltiefe eines Reifens zu bestimmen. Derartige Messungen werden typischerweise mit hoher zeitlicher Auflösung (beispielsweise 3 kHz) in größeren zeitlichen Abständen durchgeführt, beispielsweise im Stundentakt. Auch eine Last kann auf diese Weise ermittelt werden.

Aus der DE 10 2018 214 154 A1 ist es bekannt, eine radiale Beschleunigungsmessung mit niedriger zeitlicher Auflösung (beispielsweise eine Messung alle 16 Sekunden) zu verwenden, um eine Laufleistung eines Fahrzeugreifens zu bestimmen. Bekannte Methoden bieten jedoch keine Lösung zur Erkennung eines ungleichmäßigen Reifenabriebs: Der Stand der Technik wird ferner gebildet durch die EP 3 789 215 A1. Es ist daher eine Aufgabe der Erfindung, ein Verfahren sowie eine Vorrichtung zur Überwachung eines Profilabriebs eines Fahrzeugreifens anzugeben, die im Fahrzeug selbst einsetzbar ist und die zuverlässige Erkennung eines ungleichmäßigen Profilabriebs ermöglicht.

Diese Aufgabe wird gelöst mit dem Gegenstand der unabhängigen Patentansprüche. Vorteilhafte Ausführungsformen und Weiterbildungen sind Gegenstand der Unteransprüche.

Gemäß einem Aspekt der Erfindung wird ein Verfahren zur Überwachung eines Profilabriebs eines Fahrzeugreifens angegeben, umfassend die Messung einer Radialbeschleunigung einer Lauffläche des Fahrzeugreifens sowie die Ermittlung einer Laufleistung des Fahrzeugreifens aus der gemessenen Radialbeschleunigung, die Ermittlung einer erwarteten Profiltiefe $TD_e$ aus der ermittelten Laufleistung mittels eines Reifenabriebmodells sowie die Ermittlung einer Profiltiefe $TD_{e,ar}$ des Fahrzeugreifens aus der gemessenen Radialbeschleunigung.

Die Profiltiefe $TD_{e,ar}$ wird dabei folgendermaßen ermittelt: es wird die Radialbeschleunigung der Lauffläche des Fahrzeugreifens zumindest während eines vollständigen Durchgangs eines Messpunktes durch eine Reifenaufstandsfläche gemessen und es wird eine zeitliche Veränderung dieser Radialbeschleunigung zumindest während eines vollständigen Durchgangs des Messpunktes durch die Reifenaufstandsfläche ermittelt. Ferner werden Extremwerte, insbesondere das Minimum und das Maximum, dieser zeitlichen Veränderung der Radialbeschleunigung als Maß $TD_{e,ar}$ für die Profiltiefe ermittelt, wobei diese Profiltiefe über eine Funktion aus den Extremwerten berechnet wird. Eine derartige Funktion kann empirisch gefunden werden oder/und auf theoretischen Überlegungen basieren und beispielsweise in Form einer Kennlinie, Tabelle oder eines analytischen Zusammenhangs vorliegen. Sie ordnet eine Höhe der Extremwerte der zeitlichen Veränderung der Radialbeschleunigung einer Profiltiefe zu.

Die derart ermittelte Profiltiefe $TD_{e,ar}$ wird mit der erwarteten Profiltiefe $TD_e$ verglichen und es wird ein ungleichmäßiger Profilabrieb festgestellt, wenn die aus der gemessenen Radialbeschleunigung ermittelte Profiltiefe $TD_{e,ar}$ von der erwarteten Profiltiefe $TD_e$ um mehr als einen festgelegten Wert abweicht.

Alternativ ist folgendes Vorgehen möglich, sodass gemäß einem weiteren Aspekt der Erfindung ein Verfahren zur Überwachung eines Profilabriebs eines Fahrzeugreifens folgendes umfasst: die Messung einer Radialbeschleunigung der Lauffläche des Fahrzeugreifens und die Ermittlung einer Laufleistung des Fahrzeugreifens aus der gemessenen Radialbeschleunigung sowie die Ermittlung einer erwarteten Profiltiefe $TD_e$ aus der ermittelten Laufleistung mittels eines Reifenabriebmodells. Das Verfahren umfasst ferner die Messung einer Radialbeschleunigung der Lauffläche des Fahrzeugreifens zumindest während eines vollständigen Durchgangs eines Messpunktes durch eine Reifenaufstandsfläche und die Ermittlung von Extremwerten Grad $a_r$ einer zeitlichen Veränderung der gemessenen Radialbeschleunigung zumindest während eines vollständigen Durchgangs des Messpunktes durch die Reifenaufstandsfläche. Es wird ferner ein erwarteter Extremwert Grad $e,a_r$ der zeitlichen Veränderung der Radialbeschleunigung unter Zugrundelegen der erwarteten Profiltiefe $TD_e$ ermittelt und mit Grad $a_r$ verglichen. Wenn Grad $e,a_r$ von Grad $a_r$ um mehr als einen festgelegten Wert abweicht, wird ein ungleichmäßiger Profilabrieb festgestellt.

Beide Vorgehensweisen beruhen auf der Erkenntnis, dass die Bestimmung der Profiltiefe über die gemessene Radialbeschleunigung versagen kann, wenn der Profilabrieb ungleichmäßig erfolgt. Dies kann man jedoch nutzen, indem man eine aufgrund einer bekannten Laufleistung des Reifens erwartete Profiltiefe mit der aus der gemessenen Radialbeschleunigung bestimmten Profiltiefe vergleicht. Abweichungen deuten dann auf einen ungleichmäßigen Profilabrieb hin.

Das Verfahren hat den Vorteil, dass eine Überwachung eines Profilabriebs und insbesondere die Erkennung eines ungleichmäßigen Profilabriebs während des Fahrbetriebs des Fahrzeugs erfolgen kann. Eine manuelle Kontrolle oder das Überfahren eines automatischen Kontrollpunktes sind nicht erforderlich.

Die Ermittlung der Laufleistung des Fahrzeugreifens aus der gemessenen Radialbeschleunigung kann auf verschiedene Weise erfolgen. Sie kann, wie dies in der DE 10 2018 21 4154 A1 beschrieben ist, über die aus der gemessenen Radialbeschleunigung und der bekannten Reifengeometrie ermittelten Winkelgeschwindigkeiten $\omega = \sqrt{a_r / r_{Sensor}}$ , und weiterhin über den Zusammenhang zwischen Winkelgeschwindigkeit und Rotationsgeschwindigkeit $v = \omega \cdot r_{dyn}$ bestimmt werden, wobei $r_{sensor}$ den Abstand des Beschleunigungssensors vom Mittelpunkt des Reifens bezeichnet und $r_{dyn}$ den dynamischen Abrollradius des Reifens. Die somit bestimmten Rotationsgeschwindigkeiten können mit der Größß eines Zeit- bzw. Messintervalls gemäß $s = v \cdot \Delta t$ in Strecken umgerechnet werden und über die Zeit aufintegriert bzw. aufsummiert werden. Die Ermittlung der Laufleistung könnte beispielsweise auch dadurch erfolgen, dass die Zahl der Umdrehungen des Fahrzeugreifens anhand des beim Durchgang des Sensors durch die Reifenaufstandsfläche entstehenden Signals gezählt und anhand der Reifengröße in eine Laufleistung übersetzt wird.

Eine derartige Bestimmung der Laufleistung aus der gemessenen Radialbeschleunigung hat den Vorteil, dass die tatsächliche Laufleistung des betreffenden Reifens ermittelt wird. Würde beispielsweise der Kilometerstand des Fahrzeugs für die Laufleistung des Reifens herangezogen, so müssten Reifenwechsel oder die zeitweise Nichtnutzung einer Achse bei Nutzfahrzeugen aufwendig berücksichtigt werden.

Die beschriebenen Verfahrensschritte können von einer Recheneinheit durchgeführt werden, die im Fahrzeugreifen angeordnet ist. Sie können jedoch auch ganz oder teilweise von einer externen Recheneinheit durchgeführt werden, die über eine drahtlose Datenverbindung mit dem Sensor im Fahrzeugreifen verbunden ist.

Anhand des Vergleichs der aus der gemessenen Radialbeschleunigung ermittelten Profiltiefe $TD_{e,ar}$ und der erwarteten Profiltiefe $TD_E$ bzw. der Extremwerte der zeitlichen Veränderungen Grad $e,a_r$ und Grad $a_r$ ist es erstmals möglich, auf die Art des ungleichmäßigen Reifenabriebs zu schließen. So äußert sich ein Mittenabrieb beispielsweise dadurch, dass die Profiltiefe $TD_{e,ar}$ bzw. Grad $e,a_r$ keinen Profilabrieb zu erkennen gibt, auch wenn ein solcher aufgrund der ermittelten Laufleistung zu erwarten wäre.

Die erwartete Profiltiefe $TD_e$ wird insbesondere unter Berücksichtigung eines Reifentyps und/oder eines Fahrzeugtyps und/oder eines Fahrverhaltens ermittelt. Dies kann auch Informationen zur Last des Fahrzeugs mit einschließen.

Gemäß einem weiteren Aspekt der Erfindung wird ein Verfahren zur Überwachung eines Profilabriebs eines Fahrzeugreifens angegeben, das das Bereitstellen von Informationen über eine Last des Fahrzeugs in Form eines Lastwerts $F_{z,0}$ sowie die Messung einer Radialbeschleunigung der Lauffläche des Fahrzeugreifens umfasst. Ferner umfasst das Verfahren die Ermittlung eines Lastwerts $F_{z,ar}$ des Fahrzeugreifens aus der gemessenen Radialbeschleunigung sowie den Vergleich des Lastwerts $F_{z,ar}$ mit dem Lastwert $F_{z,0}$ und das Feststellen eines ungleichmäßigen Profilabriebs, wenn die aus der gemessenen Radialbeschleunigung ermittelte Last $F_{z,ar}$ von dem Lastwert $F_{z,0}$ um mehr als einen festgelegten Wert abweicht.

Die Informationen über die Last des Fahrzeugs in Form des Lastwerts $F_{z,0}$ kann insbesondere durch zumindest einen Achslastsensor bereitgestellt werden.

Das Verfahren hat den Vorteil, dass es eine weitere zuverlässige Lösung zur Feststellung ungleichmäßigen Profilabriebs angibt. Insbesondere kann auch dieses Verfahren während der Fahrt durchgeführt werden. Achslastsensoren stehen insbesondere bei Nutzfahrzeugen häufig zur Verfügung und können für das Verfahren genutzt werden.

Die Ermittlung des Lastwerts $F_{z,ar}$ des Fahrzeugreifens aus der gemessenen Radialbeschleunigung umfasst insbesondere die Messung einer Radialbeschleunigung der Lauffläche des Fahrzeugreifens zumindest während eines vollständigen Durchgangs eines Messpunktes durch eine Reifenaufstandsfläche, die Ermittlung einer zeitlichen Veränderung der Radialbeschleunigung und die Ermittlung des zeitlichen Abstands von Extremwerten der zeitlichen Veränderung der Radialbeschleunigung als Maß für die Last.

Mit einem derartigen Verfahren lässt sich die Last, insbesondere auch unter Einbeziehung weiterer Parameter wie Reifentyp, Reifengröße, Fahrzeugtyp und Reifendruck, auf einfache Weise aus der Radialbeschleunigung bestimmen. Dabei wird die Tatsache ausgenutzt, dass das Signal der Radialbeschleunigung beim Durchgang des Messpunktes durch die Reifenaufstandsfläche sich charakteristisch ändert und die Ausdehnung der Reifenaufstandsfläche von der Last abhängig ist.

Wird ein ungleichmäßiger Profilabrieb festgestellt, so wird eine Warnung ausgegeben und beispielsweise dem Fahrer oder einem Flottenmanager angezeigt.

Gemäß einem weiteren Aspekt der Erfindung wird eine Vorrichtung zur Überwachung eines Profilabriebs eines Fahrzeugreifens angegeben, die zumindest einen Sensor zur Messung einer Radialbeschleunigung einer Lauffläche des Fahrzeugreifens umfasst sowie zumindest eine Recheneinheit mit einem Speicher, in dem Programmcode abgelegt ist, der die Recheneinheit veranlasst, das beschriebene Verfahren durchzuführen.

Der Sensor zur Messung der Radialbeschleunigung der Lauffläche ist insbesondere an der Innenseite des Fahrzeugreifens innerhalb der Lauffläche anordenbar.

Die Vorrichtung kann zumindest eine im Fahrzeugreifen anordenbare Recheneinheit aufweisen. Eine derartige im Fahrzeugreifen anordenbare Recheneinheit weist eine Schnittstelle für eine drahtlose Verbindung nach außen auf, beispielsweise zu einem Steuergerät des Fahrzeugs, zu einer anderen Infrastruktur oder zu einem mobilen Endgerät.

Die Vorrichtung kann ferner eine außerhalb des Fahrzeugreifens anordenbare Recheneinheit aufweisen. Beispielsweise können Schritte des beschriebenen Verfahrens von einer im Fahrzeug, jedoch außerhalb des Fahrzeugreifens angeordneten Recheneinheit durchgeführt werden oder von einer sogar außerhalb des Fahrzeugs in einer Infrastruktur bzw. einem mobilen Endgerät angeordneten Recheneinheit. Einzelne Verfahrensschritte können auch zwischen im Fahrzeugreifen und außerhalb des Fahrzeugreifens angeordneten Recheneinheiten aufgeteilt sein.

Gemäß einem weiteren Aspekt wird ein Fahrzeugreifen angegeben, der die beschriebene Vorrichtung aufweist.

Beispielhafte Ausführungsformen werden im Folgenden anhand schematischer Figuren näher beschrieben. Darin zeigen:

Figur 1    einen Längsschnitt durch einen Fahrzeugreifen mit einer Vorrichtung gemäß einer Ausführungsform der Erfindung;

Figur 2    beispielhaft das Messsignal eines im Fahrzeugreifen angeordneten Radialbeschleunigungssensors;

Figur 3    die zeitliche Ableitung des Signals gemäß Figur 2;

Figur 4    einen Graphen zum Vergleich der aus einer gemessenen Radialbeschleunigung ermittelten Profiltiefe mit einer aus einem Reifenabriebsmodell erwarteten Profiltiefe gemäß einem erfindungsgemäßen Verfahren;

Figur 5    ebenfalls einen Graphen zum Vergleich der aus einer gemessenen Radialbeschleunigung ermittelten Profiltiefe mit einer aus einem Reifenabriebsmodell erwarteten Profiltiefe gemäß einem erfindungsgemäßen Verfahren.

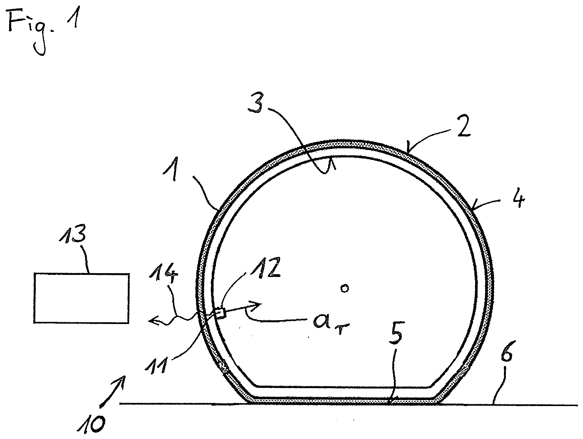

Der Fahrzeugreifen 1 gemäß Figur 1 ist als luftgefüllter Gummireifen ausgebildet. Bei ihm kann es sich um den Reifen eines Nutzfahrzeugs oder eines PKW handeln. Er weist eine Außenseite 2 mit einer Lauffläche 4 sowie eine Innenseite 3 auf. Beim Abrollen bildet sich dort, wo der Fahrzeugreifen 1 Kontakt mit einer Fahrbahn 6 hat, eine Reifenaufstandsfläche 5. Die Ausdehnung der Reifenaufstandsfläche 5 ist unter anderem abhängig von der Last des Fahrzeugs und vom Reifendruck.

An der Innenseite 3 des Fahrzeugreifens 1 ist ein Beschleunigungssensor 11 angeordnet, der Teil einer Vorrichtung 10 zur Überwachung eines Profilabriebs des Fahrzeugreifens 1 ist. Der Beschleunigungssensor 1 misst im Betrieb insbesondere die Radialbeschleunigung $a_r$ in einem Messpunkt. Der Beschleunigungssensor 11 wird angesteuert bzw. ausgelesen durch eine Recheneinheit 12, die ebenfalls auf der Innenseite 3 des Fahrzeugreifens 1 angeordnet ist. Die Recheneinheit 12 weist eine drahtlose Verbindung 14 zu einer außerhalb des Fahrzeugreifens 1 angeordneten weiteren Recheneinheit 13 auf.

Die Recheneinheiten 12, 13 weisen Speicher auf, in denen Programmcode abgelegt ist, der die Vorrichtung 10 veranlasst, das im Folgenden beschriebene Verfahren auszuführen.

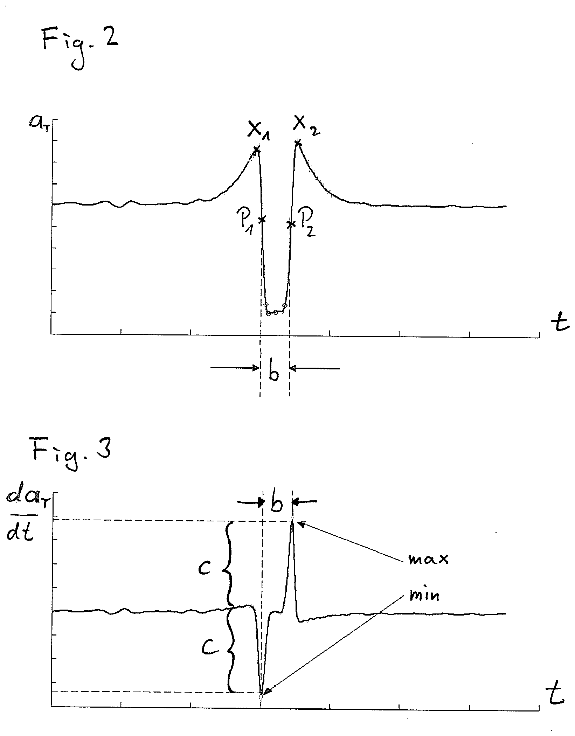

Figur 2 zeigt das von dem Sensor 11 während einer Umdrehung des Fahrzeugreifens 1 aufgenommene Signal der Radialbeschleunigung $a_r$. In dem Signal der Radialbeschleunigung $a_r$ ist erkennbar, dass das ansonsten gleichförmige Signal beim Durchgang des Beschleunigungssensors 11 durch die Reifenaufstandsfläche 5 sich charakteristisch verändert. Die Punkte X1 und X2 liegen dabei in der Region des Anfangs und des Endes der Reifenaufstandsfläche 5 und sind Punkte, an denen die gemessene Radialbeschleunigung maximal ist, bevor diese im Bereich der Reifenaufstandsfläche 5 auf ein ausgeprägtes Minimum abfällt.

Die zeitliche Ableitung des Beschleunigungssignals ist in Figur 3 dargestellt. Wie in dem Graphen zu erkennen ist, weist die zeitliche Änderung der Radialbeschleunigung ein ausgeprägtes Minimum und ein ausgeprägtes Maximum auf, die auch mit Grad $a_r$ bezeichnet werden und die den Punkten P1 bzw. P2 aus Figur 2 entsprechen und demnach Wendepunkte der Kurve gemäß Figur 2 darstellen. Der Abstand dieser beiden Punkte P1 und P2 in Figur 2 bzw. der Abstand von Maximum und Minimum in Figur 3 ist mit b bezeichnet. Die Höhe des Maximums und Minimums in Figur 3 ist mit c bezeichnet.

Die Höhe 10 des Maximums und Minimums ist ein Maß für die sich aus der gemessenen Radialbeschleunigung ergebende Profiltiefe. Die Breite b ist ein Maß für den sich aus der gemessenen Radialbeschleunigung ergebenden Lastwert $F_{z,ar}$.

Auf diese Weise können aus der gemessenen Radialbeschleunigung sowohl der Lastwert als auch die Profiltiefe ermittelt werden.

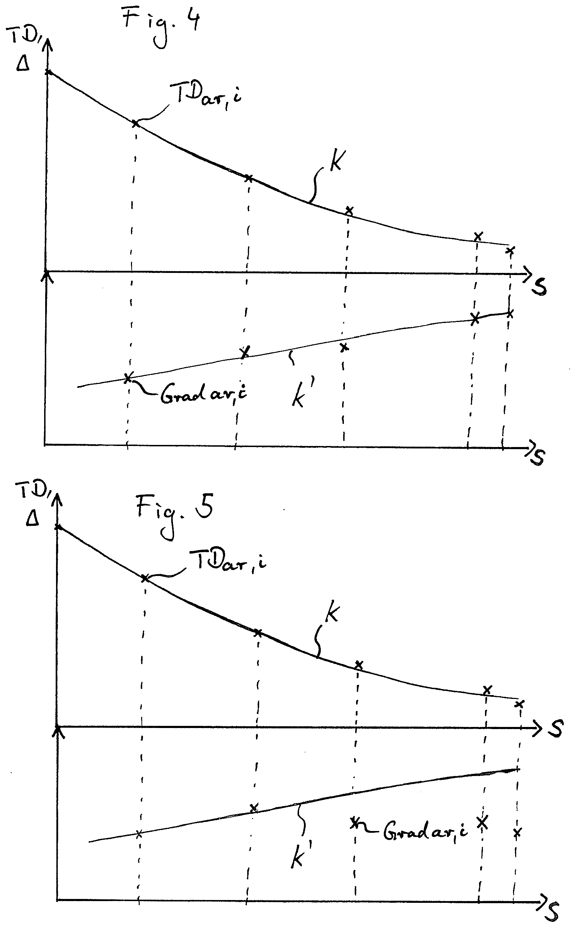

Die Figuren 4 und 5 illustrieren, wie der auf diese Weise ermittelte Lastwert bzw. die auf diese Weise ermittelte Profiltiefe mit durch Reifenabriebmodelle aus der Laufleistung des Fahrzeugreifens vorhergesagten Werten verglichen werden.

Dazu ist im oberen Teil von Figur 4 sowohl eine Schar von aus der Radialbeschleunigung ermittelten Profiltiefen $TD_{ar,i}$ über einer als Strecke s ausgedrückten Laufleistung aufgetragen als auch die Kurve K, die auf einem Reifenabriebmodell basierende Profiltiefen $TD_e$ anhand der ermittelten Laufleistung des Fahrzeugreifens angibt. Anstelle der Strecke s könnte die Laufleistung in äquivalenter Weise auch in einer Zeit ausgedrückt werden, die zum Zurücklegen der Strecke benötigt wurde.

Im unteren Teil der Figur 4 ist die zeitliche Ableitung der Kurve K in Form der Kurve K' über der Laufleistung aufgetragen sowie der Betrag von $Grad_{ar,i}$. Die Kurve K' gibt die erwarteten Extremwerte $Grad_{e,ar,i}$ an.

Figur 4 zeigt ein Beispiel, bei dem kein ungleichmäßiger Reifenabrieb vorliegt und die durch das Reifenabriebmodell vorhergesagten Profiltiefen mit den aus der Radialbeschleunigung ermittelten übereinstimmen.

Figur 5 zeigt dasselbe für den Fall eines ungleichmäßigen Reifenabriebs. Es ist erkennbar, dass die Extremwerte der zeitlichen Veränderung der Radialbeschleunigung $Grad_{ar,i}$ mit zunehmender Laufleistung des Fahrzeugreifens deutlich von den durch das Modell vorhergesagten der Kurve K' abweichen. Dadurch kann der ungleichmäßige Reifenabrieb erkannt werden.

Bezugszeichenliste

| 1 | Fahrzeugreifen |
| 2 | Außenseite |
| 3 | Innenseite |
| 4 | Lauffläche |
| 5 | Reifenaufstandsfläche |
| 6 | Fahrbahn |
| 10 | Vorrichtung |
| 11 | Beschleunigungssensor |
| 12 | Recheneinheit |
| 13 | weitere Recheneinheit |
| 14 | drahtlose Verbindung |

**Patentansprüche**

1. Verfahren zur Überwachung eines Profilabriebs eines Fahrzeugreifens, umfassend

     - Messung einer Radialbeschleunigung einer Lauffläche des Fahrzeugreifens;
     - Ermittlung einer Laufleistung des Fahrzeugreifens aus der gemessenen Radialbeschleunigung;
     - Ermittlung einer erwarteten Profiltiefe $TD_e$ aus der ermittelten Laufleistung mittels eines Reifenabriebmodells;

     - Ermittlung einer Profiltiefe $TD_{ar}$ des Fahrzeugreifens aus der gemessenen Radialbeschleunigung, wobei die Profiltiefe $TD_{ar}$ folgendermaßen ermittelt wird:

         - Messung eines zeitlichen Verlaufs der Radialbeschleunigung der Lauffläche des Fahrzeugreifens zumindest während eines vollständigen Durchgangs eines Messpunktes durch eine Reifenaufstandsfläche;
         - Ermittlung von Extremwerten einer zeitlichen Veränderung der gemessenen Radialbeschleunigung und
         - Bestimmung einer Profiltiefe $TD_{ar}$ aus den ermittelten Extremwerten anhand einer bekannten Funktion

**Gekennzeichnet durch** die weiteren Schritte:

     - Vergleich der aus der gemessenen Radialbeschleunigung ermittelten Profiltiefe $TD_{ar}$ mit der erwarteten Profiltiefe $TD_e$ und
     - Feststellen eines ungleichmäßigen Profilabriebs, wenn die aus der gemessenen Radialbeschleunigung ermittelte Profiltiefe $TD_{ar}$ von der erwarteten Profiltiefe $TD_e$ um mehr als einen festgelegten Wert abweicht.

2. Verfahren zur Überwachung eines Profilabriebs eines Fahrzeugreifens, umfassend

     - Messung einer Radialbeschleunigung der Lauffläche des Fahrzeugreifens;
     - Ermittlung einer Laufleistung des Fahrzeugreifens aus der gemessenen Radialbeschleunigung;
     - Ermittlung einer erwarteten Profiltiefe $TD_e$ aus der ermittelten Laufleistung mittels eines Reifenabriebmodells;
     - Messung des zeitlichen Verlaufs einer Radialbeschleunigung der Lauffläche des Fahrzeugreifens zumindest während eines vollständigen Durchgangs eines Messpunktes durch eine Reifenaufstandsfläche;
     - Ermittlung von Extremwerten $Grad_{ar}$ einer zeitlichen Veränderung der gemessenen Radialbeschleunigung zumindest während eines vollständigen Durchgangs des Messpunktes durch die Reifenaufstandsfläche und
     - Ermittlung eines erwarteten Extremwertes $Grad_{e,ar}$ der zeitlichen Veränderung der Radialbeschleunigung unter Zugrundelegen der erwarteten Profiltiefe $TD_e$ und
     - Vergleich der Extremwerte $Grad_{e,ar}$ und $Grad_{ar}$ und
     - Feststellen eines ungleichmäßigen Profilabriebs, wenn $Grad_{e,ar}$ von $Grad_{ar}$ um mehr als einen festgelegten Wert abweicht.

**3.** Verfahren nach Anspruch 1 oder 2,
wobei die erwartete Profiltiefe $TD_e$ unter Berücksichtigung eines Reifentyps und/oder eines Fahrzeugtyps und/oder eines Fahrverhaltens ermittelt wird.

**4.** Verfahren zur Überwachung eines Profilabriebs eines Fahrzeugreifens, umfassend

- Messung einer Radialbeschleunigung der Lauffläche des Fahrzeugreifens;
- Ermittlung eines Lastwerts $F_{z,ar}$ des Fahrzeugreifens aus der gemessenen Radialbeschleunigung;

**Gekennzeichnet durch** die weiteren Schritte:

- Bereitstellen von Informationen über eine Last des Fahrzeugs in Form eines Lastwerts $F_{z,0}$;
- Vergleich des Lastwerts $F_{z,ar}$ mit dem Lastwert $F_{z,0}$ und Feststellen eines ungleichmäßigen Profilabriebs, wenn die aus der gemessenen Radialbeschleunigung ermittelte Last von dem Lastwert $F_{z,0}$ um mehr als einen festgelegten Wert abweicht.

**5.** Verfahren nach Anspruch 4,
wobei die Informationen über eine Last des Fahrzeugs in Form des Lastwerts $F_{z,0}$ durch zumindest einen Achslastsensor bereitgestellt werden.

**6.** Verfahren nach Anspruch 4 oder 5,
wobei die Ermittlung eines Lastwerts $F_{z,ar}$ des Fahrzeugreifens aus der gemessenen Radialbeschleunigung folgendes umfasst:

- Messung einer Radialbeschleunigung der Lauffläche des Fahrzeugreifens zumindest während eines vollständigen Durchgangs eines Messpunktes durch eine Reifenaufstandsfläche;
- Ermittlung einer zeitlichen Veränderung der Radialbeschleunigung und
- Ermittlung des zeitlichen Abstands von Extremwerten der zeitlichen Veränderung der Radialbeschleunigung als Maß für die Last.

**7.** Verfahren nach einem der Ansprüche 1 bis 6,
wobei eine Warnung ausgegeben wird, wenn ein ungleichmäßiger Profilabrieb festgestellt wurde.

**8.** Vorrichtung zur Überwachung eines Profilabriebs eines Fahrzeugreifens, umfassend:

- zumindest einen Sensor zur Messung einer Radialbeschleunigung einer Lauffläche des Fahrzeugreifens;
- dadurch gekennzeichnet, dass zumindest eine Recheneinheit mit einem Speicher, in dem Programmcode abgelegt ist, der die Recheneinheit veranlasst, ein Verfahren gemäß einem der Ansprüche 1 bis 7 durchzuführen.

**9.** Vorrichtung nach Anspruch 8,
wobei der Sensor zur Messung der Radialbeschleunigung der Lauffläche an der Innenseite des Fahrzeugreifens innerhalb der Lauffläche anordenbar ist.

**10.** Vorrichtung nach Anspruch 8 oder 9,
die zumindest eine im Fahrzeugreifen anordenbare Recheneinheit aufweist.

**11.** Fahrzeugreifen aufweisend eine Vorrichtung nach einem der Ansprüche 8 bis 10.

**Claims**

**1.** Method for monitoring tread wear of a vehicle tyre, comprising

- measuring a radial acceleration of a running surface of the vehicle tyre;
- determining a mileage of the vehicle tyre from the measured radial acceleration;
- determining an expected tread depth $TD_e$ from the determined mileage by means of a tyre wear model;
- determining a tread depth $TD_{ar}$ of the vehicle tyre from the measured radial acceleration, wherein the tread depth $TD_{ar}$ is determined as follows:
- measuring a variation over time of the radial acceleration of the running surface of the vehicle tyre at least during one complete transit through a measuring point by a tyre contact area;
- determining extreme values of a change over time in the measured radial acceleration and
- determining a tread depth $TD_{ar}$ from the determined extreme values on the basis of a known function,

**characterized by** the further steps of:

- comparing the tread depth $TD_{ar}$ determined from the measured radial acceleration with the expected tread depth $TD_e$ and
- establishing uneven tread wear if the tread depth $TD_{ar}$ determined from the measured radial acceleration deviates from the expected tread depth $TD_e$ by more than a fixed value.

**2.** Method for monitoring tread wear of a vehicle tyre, comprising

- measuring a radial acceleration of the running surface of the vehicle tyre;

- determining a mileage of the vehicle tyre from the measured radial acceleration;
- determining an expected tread depth $TD_e$ from the determined mileage by means of a tyre wear model;
- measuring the variation over time of a radial acceleration of the running surface of the vehicle tyre at least during one complete transit through a measuring point by a tyre contact area;
- determining extreme values Grad $a_r$ of a change over time in the measured radial acceleration at least during one complete transit through the measuring point by the tyre contact area and
- determining an expected extreme value Grad $e,a_r$ of the change over time in the radial acceleration by taking as a basis the expected tread depth $TD_e$ and
- comparing the extreme values Grad $e,a_r$ and Grad $a_r$ and
- establishing uneven tread wear if Grad $e,a_r$ deviates from Grad $a_r$ by more than a fixed value.

**3.** Method according to Claim 1 or 2, wherein the expected tread depth $TD_e$ is determined while taking into account a tyre type and/or a vehicle type and/or vehicle handling.

**4.** Method for monitoring tread wear of a vehicle tyre, comprising

- measuring a radial acceleration of the running surface of the vehicle tyre;
- determining a load value $F_{z,ar}$ of the vehicle tyre from the measured radial acceleration;

**characterized by** the further steps of:

- providing information about a load of the vehicle in the form of a load value $F_{z,0}$;
- comparing the load value $F_{z,ar}$ with the load value $F_{z,0}$ and establishing uneven tread wear if the load determined from the measured radial acceleration deviates from the load value $F_{z,0}$ by more than a fixed value.

**5.** Method according to Claim 4, wherein information about a load of the vehicle in the form of the load value $F_{z,0}$ is provided by at least one axle load sensor.

**6.** Method according to Claim 4 or 5, wherein the determination of a load value $F_{z,ar}$ of the vehicle tyre from the measured radial acceleration comprises the following:

- measuring a radial acceleration of the running surface of the vehicle tyre at least during one complete transit through a measuring point by a tyre contact area;
- determining a change over time in the radial acceleration and
- determining the time interval between extreme values of the change over time in the radial acceleration as a measure of the load.

**7.** Method according to one of Claims 1 to 6, wherein a warning is issued if uneven tread wear has been established.

**8.** Method for monitoring tread wear of a vehicle tyre, comprising:

- at least one sensor for measuring a radial acceleration of a running surface of the vehicle tyre;
- **characterized by** at least one computing unit with a memory, stored in which is program code which causes the computing unit to carry out a method according to one of Claims 1 to 7.

**9.** Device according to Claim 8, wherein the sensor for measuring the radial acceleration of the running surface can be arranged within the running surface on the inner side of the vehicle tyre.

**10.** Device according to Claim 8 or 9, which has at least one computing unit that can be arranged in the vehicle tyre.

**11.** Vehicle tyre having a device according to one of Claims 8 to 10.

**Revendications**

**1.** Procédé de surveillance de l'usure de la sculpture d'un pneu de véhicule, comprenant

- mesure d'une accélération radiale d'une bande de roulement du pneu de véhicule ;
- détermination d'un kilométrage du pneu de véhicule à partir de l'accélération radiale mesurée ;
- détermination d'une profondeur de sculpture attendue $TD_e$ à partir du kilométrage déterminé au moyen d'un modèle d'usure de pneu ;
- détermination d'une profondeur de sculpture $TD_{ar}$ du pneu de véhicule à partir de l'accélération radiale mesurée, la profondeur de sculpture $TD_{ar}$ étant déterminée de la manière suivante :
- mesure d'une évolution dans le temps de l'accélération radiale de la bande de roulement du pneu de véhicule au moins pendant un passage complet d'un point de mesure par une surface de contact du pneu ;
- détermination des valeurs extrêmes d'une variation dans le temps de l'accélération radiale mesurée et
- spécification d'une profondeur de sculpture $TD_{ar}$ à partir des valeurs extrêmes déterminées au moyen d'une fonction connue

**caractérisé par** les étapes supplémentaires suivantes :

- comparaison de la profondeur de sculpture $TD_{ar}$, déterminée à partir de l'accélération radiale mesuré, avec la profondeur de sculpture attendue $TD_e$ et
- constatation d'une usure irrégulière de la sculpture lorsque la profondeur de sculpture $TD_{ar}$, déterminée à partir de l'accélération radiale mesurée, s'écarte de la profondeur de sculpture attendue $TD_e$ de plus d'une valeur fixée.

2. Procédé de surveillance de l'usure de la sculpture d'un pneu de véhicule, comprenant

- mesure d'une accélération radiale de la bande de roulement du pneu de véhicule ;
- détermination d'un kilométrage du pneu de véhicule à partir de l'accélération radiale mesurée ;
- détermination d'une profondeur de sculpture attendue $TD_e$ à partir du kilométrage déterminé au moyen d'un modèle d'usure de pneu ;
- mesure de l'évolution dans le temps d'une accélération radiale de la bande de roulement du pneu de véhicule au moins pendant un passage complet d'un point de mesure par une surface de contact du pneu ;
- détermination des valeurs extrêmes Grad $a_r$ d'une variation dans le temps de l'accélération radiale mesurée au moins pendant un passage complet du point de mesure par la surface de contact du pneu et
- détermination d'une valeur extrême attendue Grad e,$a_r$ de la variation dans le temps de l'accélération radiale en se basant sur la profondeur de sculpture attendue $TD_e$ et
- comparaison des valeurs extrêmes Grad e,$a_r$ et Grad $a_r$ et
- constatation d'une usure irrégulière de la sculpture lorsque Grad e,$a_r$ s'écarte de Grad $a_r$ de plus d'une valeur fixée.

3. Procédé selon la revendication 1 ou 2,
la profondeur de sculpture attendue $TD_e$ étant déterminée en tenant compte d'un type de pneu et/ou d'un type de véhicule et/ou d'un comportement de conduite.

4. Procédé de surveillance de l'usure de la sculpture d'un pneu de véhicule, comprenant

- mesure d'une accélération radiale de la bande de roulement du pneu de véhicule ;
- détermination d'une valeur de charge $F_{z,ar}$ du pneu de véhicule à partir de l'accélération radiale mesurée ;

**caractérisé par** les étapes supplémentaires suivantes :

- fourniture d'informations à propos d'une charge du véhicule sous la forme d'une valeur de charge $F_{z,0}$ ;
- comparaison de la valeur de charge $F_{z,ar}$ avec la valeur de charge $F_{z,0}$ et constatation d'une usure irrégulière de la sculpture lorsque la charge déterminée à partir de l'accélération radiale mesurée s'écarte de la valeur de charge $F_{z,0}$ de plus d'une valeur fixée.

5. Procédé selon la revendication 4,
les informations à propos d'une charge du véhicule sous la forme de la valeur de charge $F_{z,0}$ étant fournies par au moins un capteur de charge d'essieu.

6. Procédé selon la revendication 4 ou 5,
la détermination d'une valeur de charge $F_{z,ar}$ du pneu de véhicule à partir de l'accélération radiale mesurée comprenant les opérations suivantes :

- mesure d'une accélération radiale de la bande de roulement du pneu de véhicule au moins pendant un passage complet d'un point de mesure par une surface de contact du pneu ;
- détermination d'une variation dans le temps de l'accélération radiale et
- détermination de l'écart temporel des valeurs extrêmes de la variation dans le temps de l'accélération radiale en tant que mesure pour la charge.

7. Procédé selon l'une des revendications 1 à 6,
un avertissement étant émis lorsqu'une usure irrégulière de la sculpture a été constatée.

8. Dispositif de surveillance de l'usure de la sculpture d'un pneu de véhicule, comprenant :

- au moins un capteur destiné à mesurer une accélération radiale d'une bande de roulement du pneu de véhicule ;
- **caractérisé par** au moins une unité de calcul pourvue d'une mémoire, dans laquelle est stocké un code de programme qui amène l'unité de calcul à mettre en oeuvre un procédé selon l'une des revendications 1 à 7.

**9.** Dispositif selon la revendication 8,
le capteur destiné à mesurer l'accélération radiale de la bande de roulement pouvant être disposé sur le côté intérieur du pneu de véhicule à l'intérieur de la bande de roulement.

**10.** Dispositif selon la revendication 8 ou 9,
qui comporte au moins une unité de calcul pouvant être disposée dans le pneu de véhicule.

**11.** Véhicule possédant un dispositif selon l'une des revendications 8 à 10.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017032466 A
- DE 102018214154 A1

- EP 3789215 A1